# EUROPEAN PATENT SPECIFICATION

(11) **EP 3 861 392 B1**
(45) Date of publication and mention of the grant of the patent: **11.02.2026**
(21) Application number: 19791079.7
(22) Date of filing: 03.10.2019
(51) Int. Cl.: G02B 6/44

(54) **FIBER OPTIC CABINETS HAVING CABLE AND DUCT MANAGEMENT SYSTEMS**
FASEROPTISCHE SCHRÄNKE MIT KABEL- UND FÜHRUNGSVERWALTUNGSSYSTEMEN
ARMOIRES DE FIBRES OPTIQUES AYANT DES SYSTÈMES DE GESTION DE CÂBLES ET DE GAINES

(30) Priority: 05.10.2018 US 201862741536 P; 29.11.2018 US 201862772696 P
(43) Date of publication of application: 11.08.2021
(73) Proprietor: Corning Research & Development Corporation, Corning, New York 14831 (US)
(72) Inventor: GAJEK, Max, 93-590 Lodz (PL); MÜLLER, Michael, 58706 Menden (DE); STRUNCK, Sven, 13129 Berlin (DE)
(74) Representative: Elkington and Fife LLP
(86) International application number: PCT/US2019/054433
(87) International publication number: WO 2020/072737

(56) References cited:
- EP-A1- 2 148 231
- EP-A1- 2 661 092
- WO-A1-2019/081763
- WO-A1-2020/072736
- WO-A1-96/24081
- DE-A1- 102011 111 399
- DE-U1- 202013 102 267

## Description

### CROss-REFERENCE TO RELATED APPLICATION

This application claims the benefit of priority to International Application No. PCT/US2019/054433, filed October 3, 2019, which claims the benefit of priority to U.S. Provisional Application Serial No. 62/772,696, filed November 29, 2018, and U.S. Provisional Application Serial No. 62/741,536, filed October 5, 2018.

### BACKGROUND

The present disclosure generally relates to cabinets for fiber optic cable and duct management, fiber optic cable and duct management systems, and methods of handling ducts and cables inside of fiber optic cable cabinets.

Current solutions that manage fiber optic cables use hose clamps to strain relieve ducts into which cables are blown. Bare buffer tubes are organized and mounted in plastic organizational elements on a hinged door, after which tubes are introduced into columns containing splice trays. Disclosed herein are different approaches to cable mounting and organizing with a number of improvements. The improvements disclosed herein further aim to increase the number of cables that can be mounted inside cabinets, and thereby ease workloads for operators. DE 102011111399 A1 discloses a fiber optic cable housing including a holding device comprising walls having indentations into which fibres can be pressed into a clamping fit, and a pivotable flap that bears against the clamped fibres. WO 9624081 discloses a pedestal and holders for fiber optic cable. EP 2661092 A1 discloses a cabinet for fibre optic cable. DE 202013102267 U1 discloses a cable distribution box and an accompanying installation element. The later published document WO 2020/072736 A1 discloses cabinets for fiber optic cable and duct management, comprising a duct-cable management system including a strain relief assembly having at least two pairs of alignment elements, with each of the alignment elements having a plurality of strain relieving grooves. An incision providing strain relief is made in a duct when the duct is pushed into one of the grooves.

### SUMMARY

In accordance with one aspect, the present disclosure is directed toward a cabinet for fiber optic cable and duct management, as defined in claim 1.

### BRIEF DESCRIPTION OF THE DRAWINGS

FIG. 1 is a front perspective view of a fiber optic cabinet in accordance with embodiments disclosed herein.
FIGs. 2A, 2B, 3A, and 3B are perspective views of the cabinet shown in FIG. 1 with its door and top section being removed in accordance with embodiments disclosed herein.
FIG. 4 is a side view of the cabinet shown in FIG. 1 in accordance with embodiments disclosed herein.
FIGs. 5A and 5B are partial perspective view of a cable and duct management system included in the cabinet shown in FIG. 1.

It is to be understood that both the foregoing general description and the following detailed description are merely exemplary and intended to provide an overview or framework to understanding the nature and character of the claims. The accompanying drawings are included to provide a further understanding, and are incorporated in and constitute a part of this specification. The drawings illustrate one or more embodiments, and together with the description explain the principles and operation of the various embodiments.

In the following detailed description, reference is made to the accompanying drawings, which form a part hereof. In the drawings, similar symbols may be used to identify similar components, unless context dictates otherwise.

Moreover, the illustrative embodiments described in the detailed description and drawings are not meant to be limiting.

Also, it will be readily understood that the aspects of the present disclosure, as generally described herein, and illustrated in the various accompanying figures, can be arranged, substituted, combined, separated, and designed in a wide variety of different configurations, all of which are explicitly contemplated herein. It will be understood that when an element is referred to as being "on", "attached" to, "connected" to, "coupled" with, "contacting", etc., another element, it can be directly on, attached to, connected to, coupled with or contacting the other element or intervening elements may also be present. In contrast, when an element is referred to as being, for example, "directly on", "directly attached" to, "directly connected" to, "directly coupled" with or "directly contacting" another element, there are no intervening elements present.

It will be further understood that, although the terms "first", "second", etc. may be used herein to describe various elements, components, etc., these elements, components, etc. should not be limited by these terms. These terms are only used to distinguish one element, component, etc. from another element, component, etc. Thus, a "first" element or component discussed below could also be termed a "second" element or component without departing from the teachings of the present invention. In addition, the sequence of operations (or steps) is not limited to the order presented in the claims unless specifically indicated otherwise.

Disclosed herein are fiber optic cabinets, including duct and cable management systems and methods of handling ducts and cables inside of fiber optic cable cabinets. Accordingly, embodiments disclosed herein allow for easier duct and cable mounting, particularly in grooves that provide a strain relieving capability.
Accordingly, embodiments disclosed herein allow for easier duct and cable mounting, particularly in grooves that provide a strain relieving capability.

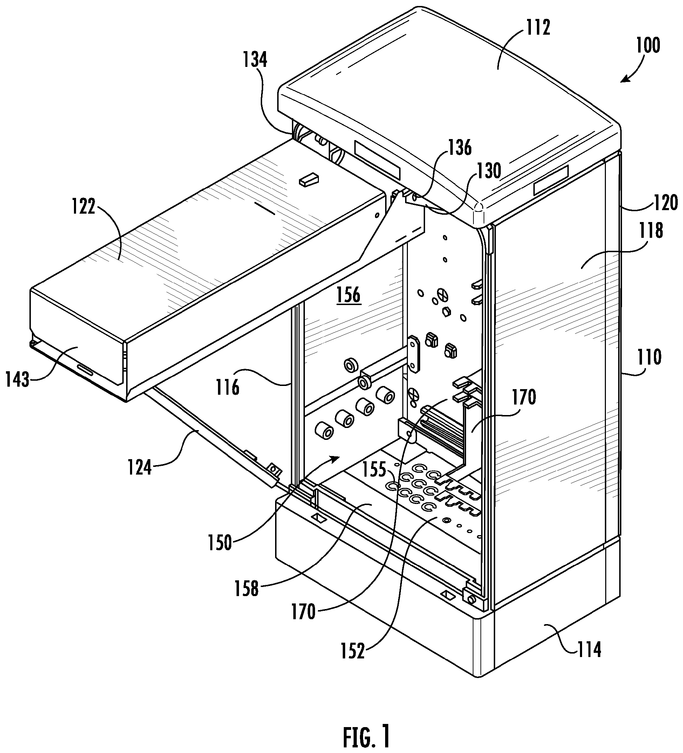

FIG. 1 is a perspective view of a fiber optic cabinet 100, including a cabinet body 110, having a removable top section 112, a bottom section 114, a first sidewall 116, a second sidewall 118, and a rear wall 120. The cabinet body 110 also includes a demountable door 122, a door mounting assembly 130 coupled to the top section 112, and a collapsible leg 124 coupled to the bottom section 114 and the door 122.

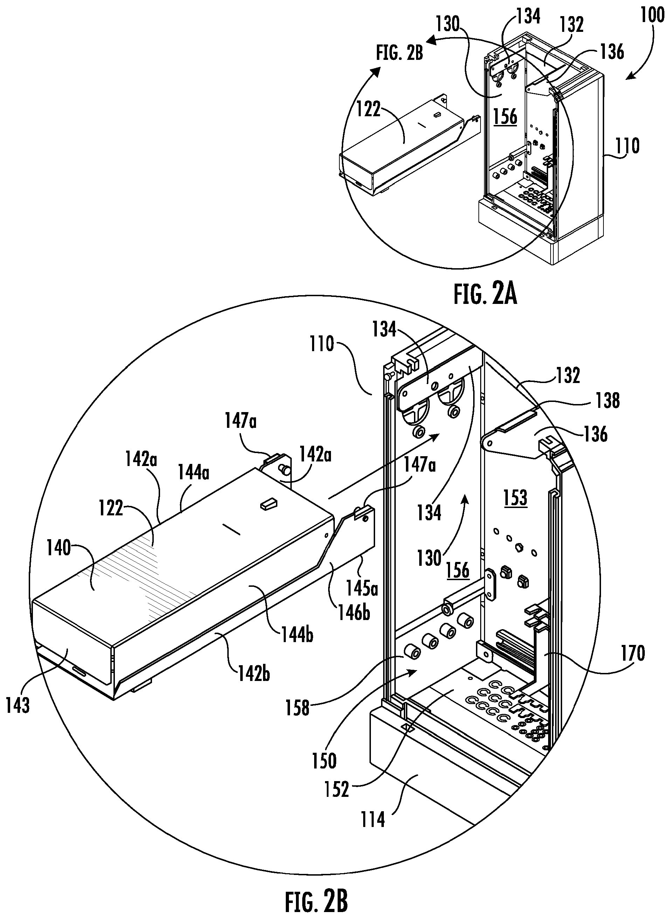

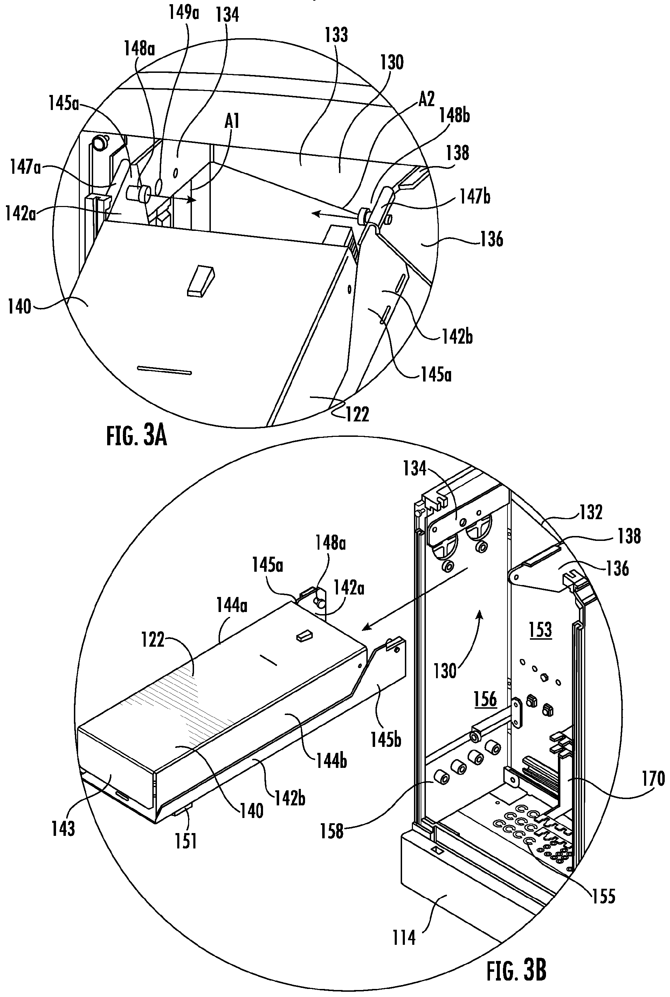

The door mounting assembly 130 is coupled to interior wall surfaces of the cabinet, as shown particularly in FIGs. 2A, 2B, 3A, and 3B. The door mounting assembly 130 includes a rear mounting plate 132, a sidewall mounting plate 134, and a medial mounting plate 136. The rear mounting plate 132 is coupled to an interior rear wall surface 153 and an interior sidewall surface 156. The sidewall mounting plate 134 is coupled to the interior sidewall surface 156 and the medial mounting plate 136 is cantilevered with respect to the rear mounting plate 132 and the interior rear wall surface 153. The medial mounting plate 136 includes a lip element 138 that mates with the door 122, as will be further described.

The demountable door 122 includes a front plate 140, side plates 142a, 142b, a bottom plate 143, side sections 144a, 144b, and a rear plate 151. Each side section 144a, 144b has an extension element 145a, 145b. Integrally attached to each extension element 145a, 145b is a door lip 147a, 147b. In addition, movable pins 148a. 148b are integrally attached to inner surfaces of each extension each extension element 145a, 145b.

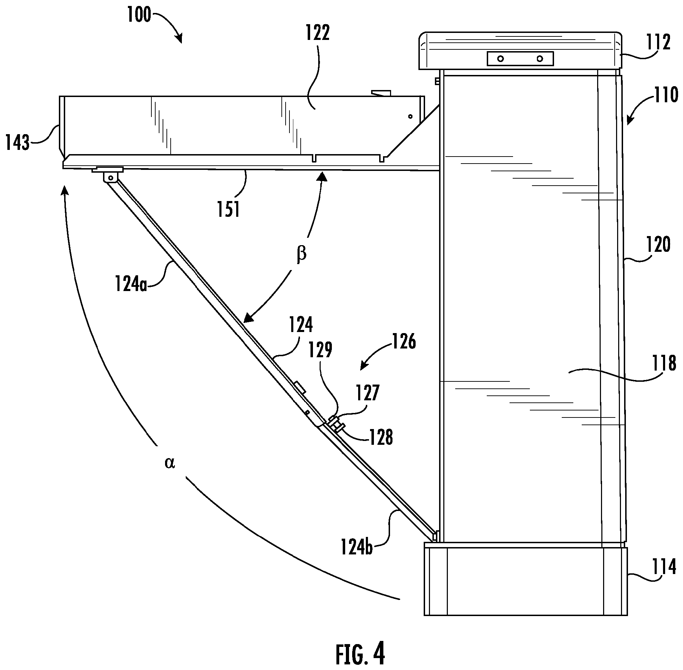

To mount the door 122, movable pins 148a, 148b are configured to move inwardly, as indicated by arrows A1, A2 shown in FIG. 3A and snap into a complementary opening/cavity 149a (FIG. 3A), 1491) (not shown - positioned on an inner surface of the medial mounting plate 136). The door 122 is further secured by the positioning of the first door lip 147a onto the sidewall mounting plate 134 and the second door lip 147b onto the medial mounting plate 136, as shown particularly in FIG. 3A. The door 122 is also preferably configured for positioning at an angle α up to about 90° with respect to the bottom section 114 and the bottom plate 143, as shown in FIG. 4.

Referring to FIG. 4, a collapsible leg 124 is preferably coupled to the door 122. The leg 124 includes an upper leg section 124a and a lower leg section 124b. The upper leg section 124a is connected to the door via a leg hinge 125. The leg sections 124a, 124b are coupled by a leg connection assembly 126, including a locking bracket 127 and a keying element 128. Portions of the locking bracket 127 are connected to both the upper leg section 124a and the lower leg section 124b. The locking bracket 127 also includes an opening 129 configured to receive the keying element 128 and lock the keying element 128 into the locking bracket 127 via mechanical means. Such mechanical means include, but are not limited to, press fit, mating threads, etc. Upon positioning of the leg connection assembly 126, the position of the upper leg section 124a can be defined with respect to an angle β, measured with respect to an inward surface 131 of the upper leg section 124a and the rear plate 151 of the demountable door 122.

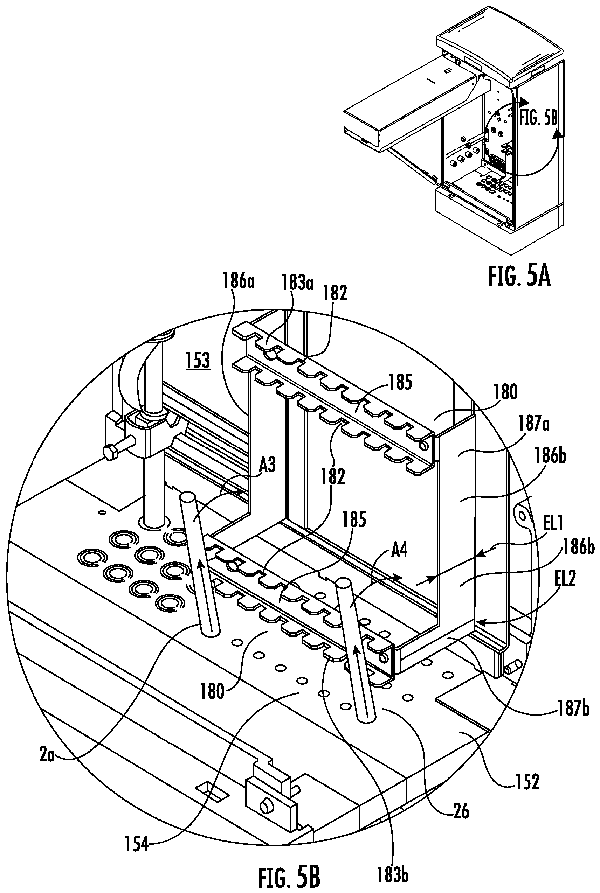

As shown particularly in FIGs. 5A and 5B coupled to the cabinet body 110 is a duct-cable management system 150. The system 150 includes a base plate 152, positioned above or within the bottom section 114, and a strain relief assembly 170. The base plate 152 has a plurality of apertures 154, preferably in a matrix pattern 155 such that one or more ducts can be routed through the base plate 152 and positioned within a portion of the strain relief assembly 170. The strain relief assembly 170 is preferably configured to accommodate about 24 ducts, with each duct having an outer diameter up to about 12 mm. The assembly 170 is also particularly suited to accommodate miniducts, and particularly miniducts having an outer diameter of about 5 mm.

The duct-cable management system 150 is coupled to interior wall surfaces of the cabinet, including but not limited to the interior rear wall surface 153 and an interior bottom wall surface (not shown). The system 150 includes a base plate 152 having a plurality of apertures 154, an uprightly positioned interior mouting plate 160, and a strain relief assembly 170. The strain relief alignment assembly 170 includes at least one pair of alignment elements, with each alignment element 180 having a plurality of strain relieving grooves 182 positioned between alignment extensions 184. At least two end plates 186 are positioned a horizontal distance away from each alignment element and an alignment wall 186 extends vertically between the pair of alignment elements 180.

The strain relief assembly 170 includes two pair of alignment elements 180. An alignment wall 185 extends horizontally between the alignment elements and couples each respective alignment element pair. Each alignment element 180 has a plurality of strain relieving grooves 182 positioned between alignment extensions 184.

The strain relief assembly 170 also preferably includes two end plates 186a, 186b positioned a distance away from each end of the alignment elements 180. Each end plate 186a, 186b is configured to have multiple sections that extend outwardly in a staggered pattern with different extension lengths E_{L} (FIG. 5B). In the exemplary embodiments, as shown in FIGs. 5A and 5B, each end plate has two extensions lengths, E_{L1}, E_{L2}. Preferably a top plate section 187a has a shorter extension length compared to the bottom plate section 187b.

FIG. 5B is an enlarged perspective view of the strain relief assembly 170, illustrating an exemplary duct-cable installation method. The method includes the steps of routing ducts 2a, 2b through the base plate 152 and positioning the duct 2a, 2b toward a first alignment element pair 183a, as represented by arrows A3, A4. Thereafter, the ducts 2a, 2b may be positioned into grooves 182 of a second alignment element pair 183b; and pushed into the grooves 182 such that an incision/cut is made in the duct 2, providing strain relief. Accordingly, at least one groove surface is configured as a cutting surface.

It will be apparent to those skilled in the art that various modifications and variations can be made to the embodiment disclosed herein without departing from the scope of the disclosure. Other embodiments of the present disclosure will be apparent to those skilled in the art from consideration of the specification and practice of the present disclosure. It is intended that the specification and examples be considered as exemplary only, with a true scope of the present disclosure being indicated by the following claims.

## Claims

1. A cabinet for cable and duct management, comprising:
a cabinet body (110); and
a duct-cable management system (150) defined in a cavity of the cabinet body (110), the duct-cable management system (150) including a strain relief assembly (170) having at least one pair of alignment elements (180), with each alignment element (180) having a plurality of strain relieving grooves (182), wherein each alignment element (180) further comprises pairs of alignment extensions (184), and wherein each strain relieving groove (182) is disposed between one of the pairs of alignment extensions (184),
wherein at least one strain relieving groove (182) is configured as a cutting surface such that upon pushing of a duct (2) in at least one strain relieving groove (182), a cut is made to provide strain relief,
wherein the cabinet body (110) further comprises a demountable door (122) coupled to the cabinet body (110), the cabinet body (110) includes a top section (112) and a bottom section (114), the demountable door (122) is coupled to the top section (112), and the cabinet body (110) further comprises a collapsible leg (124) coupled to the demountable door (122) and the bottom section (114).

2. The cabinet of claim 1, wherein the duct-cable management system (150) further comprises a base plate (152) positioned below the strain relief assembly (170).

3. The cabinet of claim 2, wherein the base plate (152) comprises a plurality of apertures (154).

4. The cabinet of claim 3, wherein the plurality of apertures (154) is configured in a matrix pattern.

5. The cabinet of either claim 3 or 4, wherein the plurality of apertures (154) comprises at least 24 apertures.

6. The cabinet of any one of claims 1 to 5, wherein the cabinet body (110) comprises a first sidewall (116), a second sidewall (118) opposite the first sidewall, and a rear wall (120) coupling the first sidewall and the second sidewall.

7. The cabinet of any one of claims 1 to 6, wherein the strain relief assembly (170) further comprises at least two end plates (186) positioned a distance away from ends of each alignment element.

8. The cabinet of any one of claims 1 to 6, wherein the strain relief assembly (170) further comprises two end plates (186) that each have multiple sections in a staggered pattern.

9. The cabinet of any one of claims 1 to 8, wherein the top section (112) is removable.

10. The cabinet of any one of claims 1 to 9, wherein the cabinet body (110) further comprises interior wall surfaces and the door mounting assembly (130) is coupled to at least one of the interior wall surfaces.

11. The cabinet of claim 10, wherein the door mounting assembly (130) comprises a sidewall mounting plate (134), a medial mounting plate (136), and a rear mounting plate (132) coupling the sidewall mounting plate and the medial mounting plate.

12. The cabinet of claim 11, wherein the interior wall surfaces include an interior rear wall surface (153), and wherein the medial mounting plate (136) is cantilevered with respect to the rear mounting plate (132) and the interior rear wall surface.

## Patentansprüche

1. Schrank zur Kabel- und Führungsverwaltung, umfassend:
einen Schrankkörper (110); und
ein Führungskabelverwaltungssystem (150), das in einem Hohlraum des Schrankkörpers (110) definiert ist,
wobei das Führungskabelverwaltungssystem (150) eine Zugentlastungsbaugruppe (170) beinhaltet, die mindestens ein Paar von Ausrichtungselementen (180) aufweist,
wobei jedes Ausrichtelement (180) eine Vielzahl von Zugentlastungsnuten (182) aufweist, wobei jedes Ausrichtelement (180) ferner Paare von Ausrichtungserweiterungen (184) umfasst und wobei jede Zugentlastungsnut (182) zwischen einem der Paare von Ausrichtungserweiterungen (184) angeordnet ist,
wobei mindestens eine Zugentlastungsnut (182) als Schneidefläche konfiguriert ist, sodass beim Drücken einer Führung (2) in mindestens eine Zugentlastungsnut (182) ein Schnitt ausgeführt wird, um eine Zugentlastung bereitzustellen,
wobei der Schrankkörper (110) ferner eine abnehmbare Tür (122) umfasst, die an den Schrankkörper (110) gekoppelt ist, der Schrankkörper (110) einen oberen Teilabschnitt (112) und einen unteren Teilabschnitt (114) beinhaltet, die abnehmbare Tür (122) an den oberen Teilabschnitt (112) gekoppelt ist und der Schrankkörper (110) ferner einen zusammenklappbaren Schenkel (124) umfasst, der an die abnehmbare Tür (122) und den unteren Teilabschnitt (114) gekoppelt ist.

2. Schrank nach Anspruch 1, wobei das Führungskabelverwaltungssystem (150) ferner eine Grundplatte (152) umfasst, die unter der Zugentlastungsbaugruppe (170) positioniert ist.

3. Schrank nach Anspruch 2, wobei die Grundplatte (152) eine Vielzahl von Durchbrüchen (154) umfasst.

4. Schrank nach Anspruch 3, wobei die Vielzahl von Durchbrüchen (154) in einem Matrixmuster konfiguriert ist.

5. Schrank nach Anspruch 3 oder 4, wobei die Vielzahl von Durchbrüchen (154) mindestens 24 Durchbrüche umfasst.

6. Schrank nach einem der Ansprüche 1 bis 5, wobei der Schrankkörper (110) eine erste Seitenwand (116), eine zweite Seitenwand (118) gegenüber der ersten Seitenwand und eine Rückwand (120) umfasst, welche die erste Seitenwand und die zweite Seitenwand koppelt.

7. Schrank nach einem der Ansprüche 1 bis 6, wobei die Zugentlastungsbaugruppe (170) ferner mindestens zwei Endplatten (186) umfasst, die in einer Entfernung von Enden jedes Ausrichtungselements weg positioniert sind.

8. Schrank nach einem der Ansprüche 1 bis 6, wobei die Zugentlastungsbaugruppe (170) ferner zwei Endplatten (186) umfasst, die jeweils mehrere Teilabschnitte in einem versetzten Muster aufweisen.

9. Schrank nach einem der Ansprüche 1 bis 8, wobei der obere Teilabschnitt (112) abnehmbar ist.

10. Schrank nach einem der Ansprüche 1 bis 9, wobei der Schrankkörper (110) ferner Innenwandflächen umfasst und die Türmontagebaugruppe (130) an mindestens eine der Innenwandflächen gekoppelt ist.

11. Schrank nach Anspruch 10, wobei die Türmontagebaugruppe (130) eine Seitenwandmontageplatte (134), eine mittlere Montageplatte (136) und eine hintere Montageplatte (132) umfasst, welche die Seitenwandmontageplatte und die mittlere Montageplatte koppelt.

12. Schrank nach Anspruch 11, wobei die Innenwandflächen eine Innenrückwandfläche (153) beinhalten und wobei die mittlere Montageplatte (136) in Bezug auf die hintere Montageplatte (132) und die Innenrückwandfläche freitragend ist.

## Revendications

1. Armoire de gestion de câbles et de gaines, comprenant :
un corps d'armoire (110) ; et
un système de gestion de câbles et de gaines (150) défini dans une cavité du corps d'armoire (110), le système de gestion de câbles et de gaines (150) comprenant un ensemble réducteur de tension (170) comportant au moins une paire d'éléments d'alignement (180), chaque élément d'alignement (180) comportant une pluralité de rainures de réduction de tension (182), dans laquelle chaque élément d'alignement (180) comprend en outre des paires d'extensions d'alignement (184), et dans laquelle chaque rainure de réduction de tension (182) est disposée entre l'une des paires d'extensions d'alignement (184),
dans laquelle au moins une rainure de réduction de tension (182) est conçue comme une surface de coupe de sorte que lors de la poussée d'une gaine (2) dans au moins une rainure de réduction de tension (182), une coupe est effectuée pour assurer une réduction de tension,
dans laquelle le corps d'armoire (110) comprend en outre une porte démontable (122) couplée au corps d'armoire (110), le corps d'armoire (110) comprend une section supérieure (112) et une section inférieure (114), la porte démontable (122) est couplée à la section supérieure (112), et le corps d'armoire (110) comprend en outre une jambe pliable (124) couplée à la porte démontable (122) et à la section inférieure (114).

2. Armoire de la revendication 1, dans laquelle le système de gestion de câbles et de gaines (150) comprend en outre une plaque de base (152) positionnée au-dessous de l'ensemble réducteur de tension (170).

3. Armoire de la revendication 2, dans laquelle la plaque de base (152) comprend une pluralité d'ouvertures (154).

4. Armoire de la revendication 3, dans laquelle la pluralité d'ouvertures (154) est conçue selon un motif matriciel.

5. Armoire de l'une ou l'autre des revendications 3 ou 4, dans laquelle la pluralité d'ouvertures (154) comprend au moins 24 ouvertures.

6. Armoire de l'une quelconque des revendications 1 à 5, dans laquelle le corps d'armoire (110) comprend une première paroi latérale (116), une seconde paroi latérale (118) opposée à la première paroi latérale, et une paroi arrière (120) couplant la première paroi latérale et la seconde paroi latérale.

7. Armoire de l'une quelconque des revendications 1 à 6, dans laquelle l'ensemble réducteur de tension (170) comprend en outre au moins deux plaques d'extrémité (186) positionnées à distance d'extrémités de chaque élément d'alignement.

8. Armoire de l'une quelconque des revendications 1 à 6, dans laquelle l'ensemble réducteur de tension (170) comprend en outre deux plaques d'extrémité (186) qui comportent chacune de multiples sections selon un motif en quinconce.

9. Armoire de l'une quelconque des revendications 1 à 8, dans laquelle la section supérieure (112) est amovible.

10. Armoire de l'une quelconque des revendications 1 à 9, dans laquelle le corps d'armoire (110) comprend en outre des surfaces de paroi intérieure et l'ensemble de montage de porte (130) est couplé à au moins l'une des surfaces de paroi intérieure.

11. Armoire de la revendication 10, dans laquelle l'ensemble de montage de porte (130) comprend une plaque de montage de paroi latérale (134), une plaque de montage médiane (136) et une plaque de montage arrière (132) couplant la plaque de montage de paroi latérale et la plaque de montage médiane.

12. Armoire de la revendication 11, dans laquelle les surfaces de paroi intérieure comprennent une surface de paroi arrière intérieure (153), et dans laquelle la plaque de montage médiane (136) est en porte-à-faux par rapport à la plaque de montage arrière (132) et à la surface de paroi arrière intérieure.
